(19) **Europäisches Patentamt**

**European Patent Office**

**Office européen des brevets**

(11) Numéro de publication : **0 508 908 A1**

(12) # DEMANDE DE BREVET EUROPEEN

(21) Numéro de dépôt : **92401025.9**

(22) Date de dépôt : **10.04.92**

(51) Int. Cl.$^5$ : **G01D 5/26,** G01K 11/00

(30) Priorité : **12.04.91 FR 9104515**

(43) Date de publication de la demande :
**14.10.92 Bulletin 92/42**

(84) Etats contractants désignés :
**CH DE DK ES FR GB IT LI NL SE**

(71) Demandeur : **ALCATEL ALSTHOM
COMPAGNIE GENERALE D'ELECTRICITE
54, rue La Boétie
F-75382 Paris Cédex 08 (FR)**

(72) Inventeur : **Fevrier, Hervé
11, boulevard du 1er Mai
F-19300 Massy (FR)**
Inventeur : **Artigaud, Serge
15, square Surcouf
F-91350 Grigny (FR)**
Inventeur : **Hervo, Jean
20bis, avenue du Bois
F-91210 Draveil (FR)**

(74) Mandataire : **Weinmiller, Jürgen et al
Lennéstrasse 9 Postfach 24
W-8133 Feldafing (DE)**

(54) **Procédé et dispositif de mesure pour capteur à fibre optique.**

(57)    Le procédé de traitement de signaux obtenus par réflectométrie est du type consistant à générer au moins une impulsion optique d'entrée à une extrémité d'une fibre optique comportant au moins un obstacle et à évaluer le signal de retour électrique en sortie d'un transducteur opto-électronique. Cette évaluation consiste à acquérir, pour chaque obstacle considéré pour lequel on veut relever la caractéristique, et pour chaque signal de retour, les trois valeurs suivantes :

$$Eo = \sum_n \int_{To}^{To+DT} r(t)\, dt, \quad Ed = \sum_n \int_{T1}^{T1+DT} r(t)\, dt, \quad Ep = \sum_n \int_{T1+T2}^{T1+T2+DT} r(t)\, dt$$

avec
n =
nombre d'impulsions optiques d'entrée, avec n étant supérieur ou égal à 1 ;
T1 =
délai précédant le début d'une première fenêtre temporelle pendant laquelle l'amplitude du signal électrique de retour est évaluée juste avant l'apparition de l'écho du à l'obstacle considéré ;
T2 =
délai séparant le début de la première fenêtre temporelle et le début d'une seconde fenêtre temporelle comprenant le palier supérieur de l'écho dû à cet obstacle considéré,
To =
délai précédant le début d'une troisième fenêtre temporelle pendant laquelle le courant d'obscurité du transducteur opto-électronique est évalué, la troisième fenêtre temporelle précédant le signal électrique de retour,
DT =
durée de chaque fenêtre temporelle ;
r(t) =
signal électrique de retour,
et à calculer le rapport R = $\dfrac{Ep - Eo}{Ed - Eo}$ pour en déduire une caractéristique liée à l'obstacle considéré.

EP 0 508 908 A1

FIG.1

FIG.4

Le domaine de l'invention est celui des procédés et dispositifs de mesure pour capteurs à fibre optique. Plus précisément, la présente invention concerne un procédé et un dispositif de mesure applicable à un capteur multipoint à fibre optique.

De façon connue, les capteurs à fibre optique permettent une isolation galvanique entre la source dont on veut mesurer une caractéristique et le dispositif de mesure. Ils présentent de plus un poids et un encombrement réduits.

L'importante bande passante des fibres optiques offre également de vastes possibilités de multiplexage de tels capteurs optiques. Leur immunité aux perturbations électromagnétiques permet notamment de les utiliser dans des environnements de champs magnétiques importants, par exemple dans des équipements électrotechniques de puissance. Les capteurs à fibre optique peuvent être avantageusement utilisés pour la surveillance de navires tels que des méthaniers. Ces capteurs peuvent être des capteurs de pression, d'humidité, de température, etc..

L'invention sera mieux comprise à partir de la description suivante d'un mode de réalisation connu concernant un capteur de température multipoint.

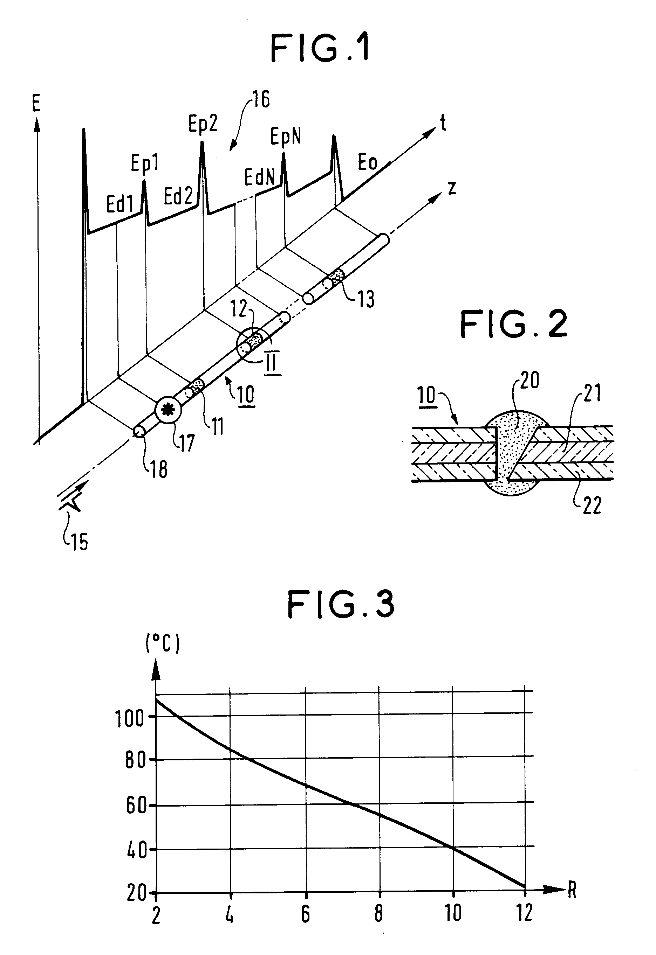

La figure 1 est un schéma de principe d'un capteur de température multipoint à fibre optique. Un tel capteur de température est décrit dans la demande de brevet européen n°0.247.581 au nom de la Compagnie Générale d'Electricité.

Une fibre de mesure 10 est constituée d'une pluralité de points sensibles 11, 12, 13 insérés entre des parties de fibre optique courante. Comme représenté en figure 2, chaque point sensible 11, 12, 13 est constitué par un matériau polymère 20 d'indice optique n proche de l'indice n1 du coeur 21 de la fibre optique 10, sans toutefois lui être égal. La fibre optique 10 est constituée par le coeur 21 et par une gaine optique 22. Le matériau polymère 20 a, vu en coupe selon l'axe de la fibre, la forme d'un trapèze.

Lorsque l'on envoie une impulsion optique 15 dans la fibre optique 10, en toute abscisse z de la fibre optique 10 se produit une très faible diffusion de la lumière de façon isotrope (diffusion de Rayleigh 17). Une partie de cette lumière diffusée est guidée à l'inverse du sens de propagation z de l'impulsion optique 15, et l'on observe en retour en fonction du temps un signal de rétrodiffusion. L'impulsion optique est habituellement générée par un laser émetteur coopérant avec un coupleur optique et une photodiode (non représentés) qui permettent de récupérer le signal de rétrodiffusion. Cette technique d'observation du signal de retour dans une fibre, appelée réflectométrie optique résolue dans le temps (Optical Time Domain Reflectometry), peut être assimilée à une technique radar.

L'axe des abscisses représente le temps et l'axe des ordonnées l'énergie lumineuse rétrodiffusée. Lorsque l'impulsion optique 15 rencontre un point sensible 11, 12, 13, une réflexion partielle de l'énergie lumineuse se produit et on obtient un écho (image de l'impulsion optique 15 de départ) sur le signal 16 de rétrodiffusion dont l'amplitude est liée à l'écart d'indice $\Delta n = n-n1$.

D'autre part, l'indice optique du polymère 20 varie de façon importante avec la température, et, par conséquent, il en va de même de l'amplitude de l'écho correspondant au point sensible. Les amplitudes des échos Ep1, Ep2, EpN correspondent donc directement aux températures des points sensibles 11, 12 et 13 respectivement.

Le signal 16 de rétrodiffusion est donc complété d'autant d'échos Ep1, Ep2, EpN qu'il y a de points sensibles 11, 12, 13 dans la fibre optique 10. Un tel signal est ci-après dénommé signal optique de retour. Le temps séparant deux échos correspond au temps de propagation d'aller-retour de l'impulsion réfléchie entre deux points sensibles. L'impulsion subit une atténuation due à la diffusion précédemment citée, cette atténuation étant exponentielle. C'est pourquoi la relation suivante est vérifiée:

Ed1 > Ed2 >...> EdN > Eo, Eo correspondant par exemple au courant d'obscurité d'une photodiode à avalanche placée à l'extrémité 18 de la fibre optique 10, destinée à convertir le signal optique 16 de retour en un signal électrique de retour.

Pour éviter d'éventuelles erreurs provoquées par des pertes en amont de la fibre optique 10, telles que des pertes par courbure, la mesure du signal 16 de retour est une mesure différentielle. Celle-ci consiste à diviser l'amplitude de l'écho considéré par l'amplitude du niveau de rétrodiffusion mesuré juste en amont du capteur, qui sert ainsi de niveau de référence.

Selon un premier procédé de mesure connu, la mesure est effectuée à l'aide d'un oscilloscope numérique dans lequel est injecté le signal électrique de retour. En définissant Ed comme étant l'amplitude du signal électrique de retour précédant l'apparition d'un écho d'amplitude Ep dû à la présence d'un point sensible 11, 12, 13,... on obtient le rapport thermométrique:

$$R = \frac{Ep-Eo}{Ed-Eo}$$

Un exemple de courbe de réponse de ce rapport thermométrique en fonction de la température d'un point sensible est représenté sur la figure 3.

EP 0 508 908 A1

Le rapport thermométrique calculable à partir du signal de retour est en abscisse et la température correspondante à laquelle est soumis un capteur en matériau polymère en ordonnée.

On peut noter que la faible perte d'insertion d'un capteur sur la ligne optique 10 permet de disposer une importante quantité de capteurs (points sensibles 11, 12, 13,...) sur une même ligne optique et ainsi de mesurer les signaux provenant de ces différents capteurs.

Du signal électrique de retour de la ligne 10 de capteurs sont ensuite extraits les valeurs des différents rapports thermométriques permettant de déterminer les températures des capteurs 11, 12, 13.

Pour un écho du signal de retour ayant une durée brève de l'ordre de 10 ns, il est nécessaire de visualiser un nombre important de points sur l'oscilloscope numérique. Pour une bonne précision de mesure à 1°C près par exemple, il est nécessaire de disposer d'au moins un point par ns, c'est-à-dire échantillonner à 1 GHz le signal électrique de retour, pour bien numériser le palier supérieur d'un écho. De plus, l'oscilloscope doit présenter une bande passante suffisamment large pour ne pas déformer le signal reçu et notamment un écho du signal de retour. Comme la durée d'une telle impulsion est d'environ 10 ns, la bande passante théorique de l'oscilloscope numérique doit être au moins égale à 100 kHz.

Le coût très élevé d'un oscilloscope présentant une bande passante supérieure à 100 kHz et une fréquence d'échantillonnage de 1 GHz est un réel handicap de ce procédé de mesure de signaux obtenus par réflectométrie. Si la numérisation est effectuée sur une succession de signaux de retour, la fréquence d'échantillonnage peut être moins importante, mais le temps de moyennage des signaux est alors beaucoup plus important pour obtenir une précision suffisante (de l'ordre de 1°C). Ce moyennage dure environ une minute pour une ligne comprenant 10 capteurs. Il faut en effet disposer d'un grand nombre de points sur l'écran de l'oscilloscope numérique pour obtenir un rapport S/B important. La génération d'une multitude d'impulsions laser est assurée par un générateur branché sur le trigger de l'oscilloscope numérique pour synchroniser les impulsions générées avec le signal électrique de retour. Les impulsions déclenchent l'oscilloscope qui procède à un échantillonnage imbriqué aléatoire, c'est-à-dire que l'échantillonnage est effectué avec un décalage aléatoire. On compte donc sur un effet statistique pour améliorer le rapport S/B.

Un autre inconvénient de ce procédé de mesure est qu'il nécessite la mesure de toutes les réflexions produites par les capteurs de la fibre optique 10, et également de signaux non nécessaires pour la détermination des caractéristiques d'un capteur. Ces signaux sont ceux obtenus entre deux réflexions. Une grande partie de l'information acquise n'est donc pas utile. L'obligation d'acquérir la totalité des signaux incluant non seulement les signaux utiles provenant des capteurs mais également ceux provenant de la diffusion de Rayleigh entraîne ainsi une perte de temps.

Il n'est pas non plus possible d'accéder uniquement à un capteur donné d'une ligne de capteurs. Le temps d'acquisition est donc relativement long, par rapport à la précision souhaitée.

Un autre inconvénient de ce procédé de mesure est qu'il met en oeuvre un oscilloscope numérique, appareil coûteux et ne présentant pas de caractère industriel. La résolution d'un tel oscilloscope est également limitée, puisqu'il doit pouvoir mémoriser des signaux de fréquence importante et on doit donc se limiter en pratique à un codage sur 8 bits.

On connaît par ailleurs un dispositif de mesure multipoint à fibre optique décrit dans la demande de brevet européen précitée. Ce dispositif propose de placer, pour chaque impulsion laser d'entrée, une fenêtre de mesure à un instant précédant de peu une impulsion de réflexion. Un circuit de traitement enregistre d'une part la valeur du signal de rétrodiffusion dans cette fenêtre de mesure, appelée VM, et mesure l'amplitude de l'impulsion de réflexion qui suit cette fenêtre, appelée VP. Le circuit de traitement calcule alors le rapport de ces deux valeurs (VP/VM) proportionnel à la température du point de mesure qui est à l'origine de cette impulsion de réflexion. Plusieurs mesures successives effectuées en un même point permettent d'obtenir une valeur moyenne qui est affichée sur un dispositif d'affichage. Afin d'obtenir la température d'un autre capteur de température de la fibre optique, la fenêtre de mesure précédente est déplacée et positionnée juste avant l'impulsion de réflexion due à cet autre capteur.

Le principal inconvénient de ce dispositif est qu'il est nécessaire de générer un nombre d'impulsions optiques d'entrée important pour obtenir les températures de tous les capteurs présents dans la fibre optique. De plus, l'instant optimal de mesure de l'amplitude d'une impulsion de réflexion est difficile à obtenir, du fait de la très courte durée d'une telle impulsion.

Par ailleurs, dans les systèmes de mesure connus, le transducteur opto-électronique qui convertit le signal optique de retour en signal électrique présente des variations de caractéristiques en fonction du temps, et ces variations entraînent des évaluations erronées des caractéristiques physiques liées aux capteurs, pour les mêmes conditions de mesure, par exemple de température.

La présente invention a notamment pour objectif de pallier ces inconvénients.

Plus précisément, un premier objectif de l'invention est de fournir un procédé de mesure pour capteurs à fibre optique permettant d'obtenir les informations de rétrodiffusion et de réflexion partielle sans oscilloscope

4

et par des moyens beaucoup plus rapides que dans l'état de la technique constitué par la demande de brevet précitée.

Un second objectif de l'invention est de fournir un tel procédé qui ne nécessite qu'un temps d'acquisition des signaux très réduit, pour une précision de mesure supérieure à celle de l'état de la technique.

Un autre objectif de l'invention et de fournir un tel procédé présentant un rapport signal sur bruit élevé.

Un objectif supplémentaire de l'invention est de permettre de sélectionner un capteur de mesure parmi d'autres dans une ligne de capteurs.

Un objectif complémentaire est de fournir un dispositif mettant en oeuvre un tel procédé permettant d'obtenir directement et avec une grande précision la température de plusieurs capteurs choisis d'une même fibre optique.

Ces objectifs, ainsi que d'autres qui apparaîtront par la suite, sont atteints grâce à un procédé de traitement de signaux optiques obtenus par réflectométrie, du type consistant à générer au moins une impulsion optique d'entrée à une extrémité d'une fibre optique et à évaluer le signal optique de retour résultant d'une part de la réflexion partielle de ladite impulsion optique d'entrée sur au moins un obstacle présent dans ladite fibre optique et d'autre part de la diffusion isotrope de ladite impulsion optique d'entrée dans ladite fibre optique, ledit signal optique de retour étant converti en un signal électrique de retour par un transducteur opto-électronique pour être traité, ledit procédé consistant à:

– mesurer l'amplitude dudit signal électrique de retour juste avant l'apparition d'un écho dudit signal électrique de retour dans une fenêtre temporelle, ledit écho résultant de la réflexion partielle de ladite impulsion optique d'entrée sur un desdits obstacles;

– mesurer l'amplitude de cet écho dudit signal électrique de retour sur le même signal électrique de retour;

– générer un signal représentatif d'une caractéristique physique liée à l'obstacle considéré, qui est à l'origine de cet écho, à l'aide desdites amplitudes mesurées.

Le procédé de l'invention est caractérisé en ce que, pour chaque obstacle considéré pour lequel on veut générer ledit signal représentatif de ladite caractéristique,

– ladite mesure de ladite amplitude dudit signal électrique de retour réalisée juste avant l'apparition d'un écho dudit signal électrique de retour consiste à acquérir la valeur Ed suivante:

$$Ed = \sum_{n} \int_{T1}^{T1+DT} r(t)\ dt$$

avec

n = nombre d'impulsions optiques d'entrée, avec n étant supérieur ou égal à 1;

T1 = délai précédant le début d'une première fenêtre temporelle pendant laquelle ladite amplitude dudit signal électrique de retour est évaluée juste avant l'apparition de l'écho du audit obstacle considéré;

DT = durée de ladite première fenêtre temporelle;

r(t) = signal électrique de retour,

– ladite mesure de l'amplitude de cet écho dudit signal électrique de retour, réalisée sur le même signal électrique de retour, consiste à acquérir la valeur Ep suivante:

$$Ep = \sum_{n} \int_{T1+T2}^{T1+T2+DT} r(t)\ dt$$

avec T2 = délai séparant le début de ladite première fenêtre temporelle et le début d'une seconde fenêtre temporelle comprenant le palier supérieur dudit écho du audit obstacle considéré,

ledit procédé consistant en outre à mesurer, sur lesdits n signaux électriques de retour, le courant d'obscurité dudit transducteur opto-électronique juste avant l'envoi de chaque impulsion optique d'entrée, ladite mesure dudit courant d'obscurité consistant à acquérir la valeur Eo suivante:

$$Eo = \sum_{n} \int_{To}^{To+DT} r(t)\, dt$$

avec To =  délai précédant le début d'une troisième fenêtre temporelle pendant laquelle ledit courant d'obscurité est évalué, ladite troisième fenêtre temporelle précédant ledit même signal électrique de retour,

ledit procédé consistant de plus à calculer le rapport R suivant:

$$R = \frac{Ep - Eo}{Ed - Eo}$$

et à en déduire ledit signal représentatif d'une caractéristique physique liée audit obstacle considéré.

Ce procédé permet donc d'acquérir, successivement et sur un même signal électrique de retour, des valeurs permettant de générer un signal représentatif d'une caractéristique physique liée à chaque obstacle considéré, en tenant compte du courant d'obscurité du transducteur opto-électronique.

Préférentiellement, ladite valeur Eo est identique pour le calcul du rapport R de chacun desdits obstacles considérés.

Avantageusement, chaque première fenêtre temporelle déterminant une période dudit signal électrique de retour précédant un écho débute après un temps préalablement déterminé pour chaque obstacle de ladite fibre optique, et chaque deuxième fenêtre temporelle comprenant le palier supérieur d'un écho correspondant du même signal électrique de retour débute après un temps fixe suivant chacun desdits temps variable.

Préférentiellement, ladite troisième fenêtre temporelle précédant ledit signal électrique de retour débute après un temps fixe indépendant de la position desdits obstacles dans ladite fibre optique.

Selon une application préférentielle, ledit obstacle présent dans ladite fibre optique est un capteur du type provoquant une réflexion partielle de ladite impulsion optique d'entrée en fonction d'une grandeur extérieure.

Avantageusement, ledit capteur est un capteur de température et ledit signal représentatif d'une caractéristique physique liée à ce capteur à partir dudit rapport R correspond à une température.

L'invention concerne également un dispositif de traitement de signaux optiques obtenus par réflectométrie, du type permettant d'évaluer un signal optique de retour résultant d'une part de la réflexion partielle d'une impulsion optique d'entrée sur au moins un obstacle présent dans une fibre optique et d'autre part de la diffusion isotrope de cette impulsion optique d'entrée dans ladite fibre optique, ledit signal optique de retour étant converti en un signal électrique de retour par un transducteur optoélectronique pour permettre son traitement, ledit dispositif comprenant un premier moyen de mesure de l'amplitude dudit signal électrique de retour juste avant l'apparition d'un écho dudit signal électrique de retour, ledit écho résultant de la réflexion partielle de ladite impulsion optique d'entrée sur un desdits obstacles, et un deuxième moyen de mesure de l'amplitude de cet écho, lesdites amplitudes étant mesurées pour chacun desdits obstacles dont on veut générer un signal représentatif d'une caractéristique physique liée à cet obstacle.

Le dispositif de l'invention est caractérisé en ce que ledit premier moyen de mesure est constitué par un premier intégrateur-sommateur permettant d'obtenir la valeur Ed suivante:

$$Ed = \sum_{n} \int_{T1}^{T1+DT} r(t)\, dt$$

avec
n =  nombre d'impulsions optiques d'entrée, avec n étant supérieur ou égal à 1;
T1 =  délai précédant le début d'une première fenêtre temporelle pendant laquelle ladite amplitude dudit signal électrique de retour est évaluée juste avant l'apparition de l'écho du audit obstacle considéré;
DT =  durée de ladite première fenêtre temporelle;
r(t) =  signal électrique de retour,
ledit deuxième moyen de mesure étant constitué par un deuxième intégrateur-sommateur permettant d'obtenir la valeur Ep suivante:

$$Ep = \sum_{n} \int_{T1+T2}^{T1+T2+DT} r(t)\, dt$$

avec T2 = délai séparant le début de ladite première fenêtre temporelle et le début d'une seconde fenêtre temporelle comprenant le palier supérieur dudit écho du audit obstacle considéré,

ledit dispositif comportant en outre un troisième moyen de mesure permettant de quantifier le courant d'obscurité dudit transducteur opto-électronique juste avant l'envoi de chaque impulsion optique d'entrée, ledit troisième moyen de mesure étant constitué par un troisième intégrateur-sommateur permettant d'obtenir la valeur Eo suivante:

$$Eo = \sum_{n} \int_{To}^{To+DT} r(t)\, dt$$

avec To = délai précédant le début d'une troisième fenêtre temporelle pendant laquelle ledit courant d'obscurité est évalué, ladite troisième fenêtre temporelle précédant ledit même signal électrique de retour,

ledit signal représentatif d'une caractéristique physique liée à cet obstacle étant obtenu à l'aide de moyens de calcul effectuant l'opération suivante:

$$R = \frac{Ep - Eo}{Ed - Eo}.$$

D'autres caractéristiques et avantages de la présente invention apparaîtront à la lecture suivante d'exemples de réalisation de l'invention mettant en oeuvre ce procédé, donnés à titre illustratif et non limitatif, et des dessins annexés dans lesquels:

– la figure 1 représente une fibre optique de mesure comprenant N capteurs de température et le signal de retour correspondant à l'envoi d'une impulsion optique d'entrée dans cette fibre;

– la figure 2 est un exemple de constitution d'un des N capteurs de température coopérant avec la fibre optique de la figure 1;

– la figure 3 représente la variation du rapport thermométrique R d'un capteur en fonction de la température de ce capteur;

– la figure 4 représente un signal de retour électrique dans lequel sont sélectionnées des périodes de temps permettant de déterminer la valeur indiquée par un capteur;

– la figure 5 représente un schéma synoptique d'un mode de réalisation préférentiel de la présente invention;

– la figure 6 représente un autre mode de réalisation de la présente invention.

Les figures 1, 2 et 3 ont été décrites précédemment dans l'exposé de l'état de la technique.

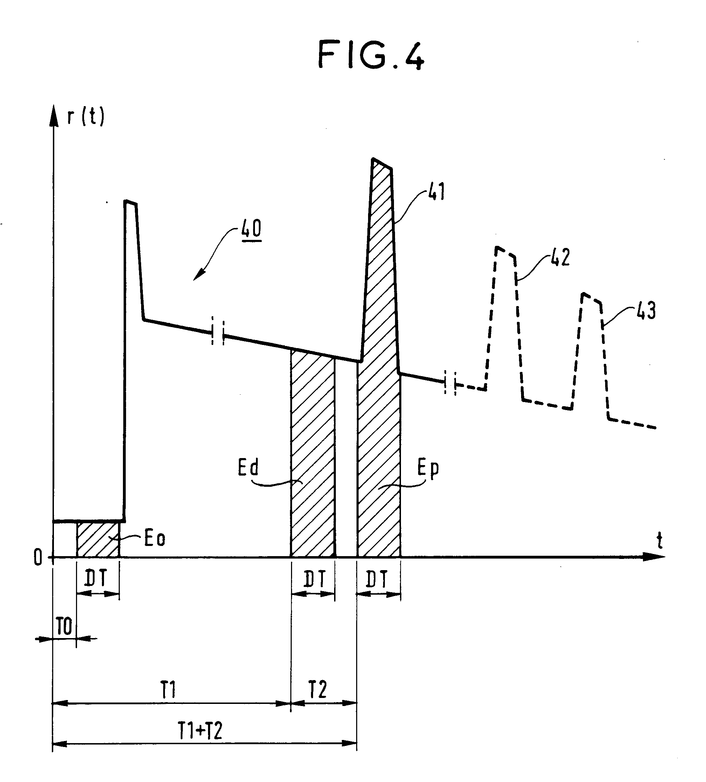

La figure 4 représente un signal de retour électrique dans lequel sont sélectionnées des périodes de temps permettant de déterminer une caractéristique liée à un capteur.

Lorsqu'une impulsion optique est envoyée à l'extrémité d'une fibre optique comprenant des obstacles, tel que par exemple des capteurs d'une grandeur externe, on observe à cette même extrémité un signal optique de retour r(t). Ce signal optique peut être transformé en signal électrique 40 à l'aide d'un transducteur opto-électronique, constitué par exemple par une photodiode à avalanche. Le signal r(t) 40 est constitué d'une tension décroissant exponentiellement comprenant un certain nombre d'échos 41, 42, 43. Chaque écho 41, 42, 43 correspond à une réflexion partielle de l'impulsion optique 15 envoyée dans la fibre 10. Ces réflexions partielles sont dues à la présence des obstacles dans la fibre optique 10 qui modifient la propagation de l'impulsion optique d'entrée. L'amplitude d'un écho est d'autant plus importante que la réflexion est forte. La décroissance exponentielle du signal électrique de retour 40 est due à la rétrodiffusion isotrope de l'impulsion optique 15 dans la fibre optique 10.

Le procédé de mesure de l'invention consiste à sélectionner certaines périodes du signal de retour électrique 40 pour les traiter. La figure 4 représente ce principe appliqué à l'écho 41. Comme déjà précisé, cet écho provient d'une réflexion partielle de l'impulsion optique 15 d'entrée sur un obstacle présent dans la fibre optique 10.

Trois périodes consécutives du signal électrique de retour sont sélectionnées pour déterminer une caractéristique liée à l'obstacle considéré. Ces sélections permettent d'obtenir trois valeurs notées Eo, Ed et Ep.

Les quantifications des valeurs Eo, Ed et Ep consistent à acquérir des parties du signal électrique de retour pendant des fenêtres temporelles successives de durée DT, ces acquisitions étant réalisées sur le même signal de retour. Des intégrations du signal électrique de retour sont réalisées pendant chacune de ces fenêtres temporelles et les résultats de ces intégrations correspondent aux valeurs Eo, Ed et Ep précédentes.

La première zone sélectionnée est une période de temps de durée DT s'achevant avant la présence d'énergie lumineuse dans la fibre optique 10. Cette première sélection a pour objectif de permettre de quantifier le courant d'obscurité de la photodiode à avalanche, afin de corriger les mesures ultérieures, comme il sera vu par la suite. Cette quantification est réalisée en effectuant une acquisition de la valeur du signal électrique de retour pendant le temps DT, et à intégrer le signal de retour pendant cette fenêtre temporelle pour obtenir la valeur Eo.

La seconde zone sélectionnée pendant le même temps DT est une période de temps précédant immédiatement l'écho 41. Le signal de retour r(t) est acquis pendant cette fenêtre temporelle de durée DT et intégré. La valeur de l'intégrale obtenue est appelée Ed.

La troisième zone sélectionnée comprend le palier supérieur de l'écho 41. En pratique, la durée d'intégration de l'écho est environ égale à la durée de la base de cet écho, comme il sera vu par la suite. La valeur de l'intégrale du signal électrique de retour pendant ce temps DT est notée Ep.

Les trois informations Eo, Ed et Ep, relevées sur le même signal électrique de retour, correspondent donc respectivement au zéro optique, au niveau précédant un écho et à l'amplitude de l'écho correspondant à la réponse de l'obstacle considéré.

Le rapport R d'un obstacle est donné par la relation:

$$R = \frac{Ep - Eo}{Ed - Eo}$$

Dans le cas où le procédé de l'invention est appliqué à un capteur de température, le rapport thermométrique R permet de déterminer directement la température à laquelle est soumis le capteur, comme représenté en figure 3.

Le procédé de l'invention permet donc d'acquérir le minimum d'informations nécessaires pour obtenir la réponse d'un capteur, et ceci de façon simultanée. Comme les mesures sont effectuées sur un signal optique d'entrée unique, les informations obtenues sont corrélées entre elles.

Afin d'augmenter le rapport signal sur bruit des informations calculées, il est avantageux de sommer les valeurs Eo, Ed et Ep obtenues pour un même capteur, pour un nombre n d'impulsions optiques d'entrée. On obtient alors les relations suivantes:

$$Eo = \sum_{n \text{ impulsions}} \int_{To}^{To+DT} r(t)\, dt$$

$$Ed = \sum_{n \text{ impulsions}} \int_{T1}^{T1+DT} r(t)\, dt$$

$$Ep = \sum_{n \text{ impulsions}} \int_{T1+T2}^{T1+T2+DT} r(t)\, dt$$

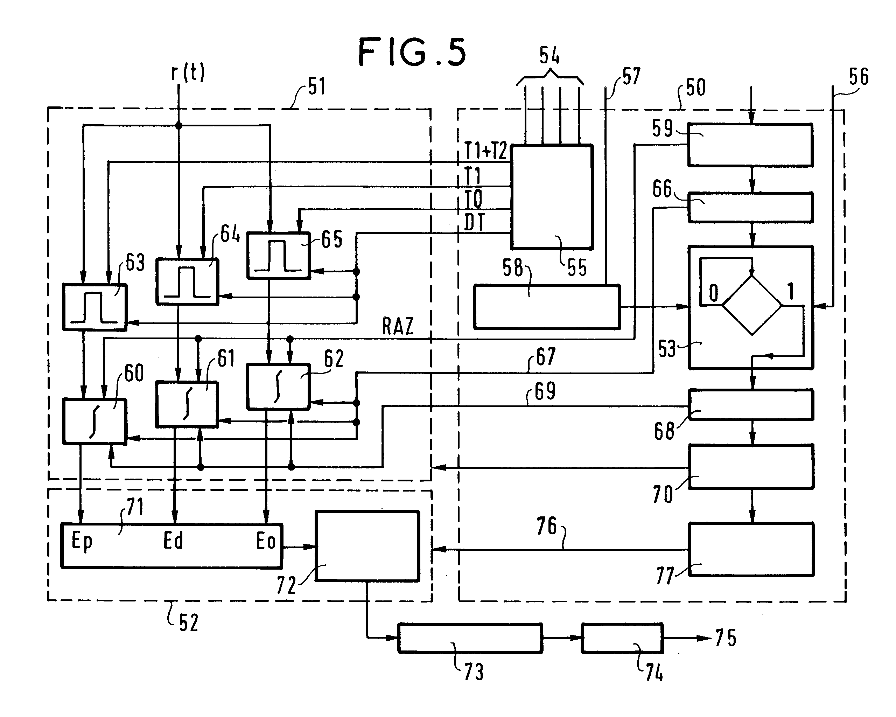

La figure 5 représente un schéma synoptique d'un mode de réalisation préférentiel de la présente invention mettant en oeuvre trois fenêtres temporelles de mesure.

Le mode de réalisation représenté est composé de trois modules 50, 51 et 52. Le module 50 constitue l'unité centrale du dispositif et comprend les unités de commande du déroulement du procédé. Le module 51 comprend les moyens d'intégration et de sommation permettant de sélectionner des périodes de temps du signal électrique de retour r(t), d'intégrer ces parties de signal pendant le temps DT et de sommer les valeurs de ces intégrales jusqu'à la fin de la mesure ou des mesures considérées. Le module 52 est un numériseur séquentiel destiné au calcul de Eo, Ed et Ep.

Le fonctionnement du dispositif est le suivant:

Avant génération d'une impulsion optique d'entrée dans la fibre optique, un dispositif externe, par exemple un micro-ordinateur, charge dans un décompteur 53 le nombre n d'impulsions optiques qui seront prises en compte pour l'analyse d'un capteur. Les impulsions optiques d'entrée sont par exemple des salves de lumière laser. Le dispositif externe envoie également, par des lignes 54, à un circuit de mise en forme 55 les délais de la figure 4 notés To, T1, T2 et la largeur DT des fenêtres de mesure. Le circuit de mise en forme 55 calcule le temps T1+T2. Chaque impulsion optique générée provoque l'envoi d'une impulsion sur une ligne 57 d'entrée d'un adaptateur 58 chargé de décrémenter le décompteur 53 d'une unité. Cet adaptateur 58 génère par exemple des impulsions compatibles avec les circuits mis en oeuvre pour le fonctionnement du dispositif. Le dispositif externe commande l'initialisation 59 de l'unité centrale 50 et une remise à zéro du contenu des intégrateurs-sommateurs 60,61,62 comprenant également des portes 63,64,65 permettant de sélectionner les intervalles d'intégration du signal électrique de retour r(t). Les intégrateurs-sommateurs 60, 61 et 62 constituent des moyens de mesure.

L'initialisation 59 provoque le début des mesures 66 qui commande par une ligne 67 le début des intégrations des périodes du signal de retour r(t) sélectionnées par les portes 63, 64 et 65. Une configuration du dispositif comportant trois portes et trois intégrateurs sommateurs permet de mesurer des valeurs Eo, Ed et Ep caractérisant un capteur particulier, et ce pour plusieurs salves laser. Les délais To, T1 et T2 sont donc fixes pour une série de mesures des caractéristiques de réflexion partielle d'un capteur donné.

En conservant DT constant pour une série de mesures, les zones du signal de retour r(t) qui seront intégrées sont donc les mêmes d'une salve à l'autre.

L'amplitude des impulsions optiques d'entrée peut présenter une variation de 5%. C'est pourquoi, pour obtenir un bon rapport signal sur bruit des mesures effectuées, il est nécessaire d'effectuer plusieurs mesures, c'est-à-dire envoyer plusieurs impulsions optiques et sommer les valeurs Eo, Ed et Ep obtenues pour chaque impulsion dans les intégrateurs-sommateurs 60, 61 et 62.

Après chaque tir laser, le décompteur 53 teste si le nombre n de tirs laser mémorisé est atteint. S'il ne l'est pas, une autre impulsion optique est prise en compte. Si le nombre n d'impulsions laser est atteint, le décompteur 53 commande la fin 68 de la mesure qui provoque l'arrêt, par la liaison 69, des intégrations-sommations.

Ensuite un transfert 70 des valeurs sommées sur n tirs laser est effectué des intégrateurs-sommateurs 60, 61 et 62 vers un registre 71 analogique de stockage temporaire compris dans le numériseur séquentiel 52. Les valeurs de Eo, Ed et Ep résultant de plusieurs sommations sont alors séquentiellement numérisées par un convertisseur 72 analogique-numérique qui fournit à un registre 73 les valeurs numériques de Eo, Ed et Ep.

La numérisation peut s'effectuer sur un nombre de bits importants (12 ou 16 bits) pour obtenir une grande précision des mesures effectuées, contrairement à l'état de la technique où seul un codage sur 8 bits est envisageable. La conversion débute sur un ordre 76 de déclenchement de conversion 77, cet ordre 76 résultant du transfert 70 des données dans le registre 71 analogique. Les valeurs numériques sont ensuite traitées par un calculateur 74 qui fournit par exemple le rapport R = (Ep-Eo)/(Ed-Eo) à sa sortie 75. Le calculateur 74 peut également être configuré pour fournir directement à sa sortie 75 la grandeur indiquée par le capteur, par exemple une température, une pression, etc... Cette grandeur constitue un signal représentatif d'une caractéristique physique liée au capteur considéré.

Le dispositif de l'invention permet donc d'intégrer plusieurs signaux et de les sommer avant d'effectuer une numérisation. Il évite ainsi une numérisation à haute fréquence du type mis en oeuvre dans les oscilloscopes numériques.

La détermination des temps To, T1 et T2 peut être effectuée de deux manières différentes, selon que la position des capteurs dans la fibre optique est connue ou non.

Si la position des capteurs dans la fibre est connue, notamment par rapport à l'entrée de la fibre optique, connaissant la vitesse de propagation du signal optique de retour dans la fibre, on peut estimer grossièrement l'ordre de grandeur du temps de retard des échos provoqués par réflexion partielle sur le ou les capteurs par rapport à l'instant de génération de l'impulsion optique d'entrée. On peut alors régler les temps T1 et T2, une fois que l'on a choisi DT. La période de temps DT est fonction de l'instrumentation utilisée et de la largeur des échos du signal de retour r(t), T1 est fonction de la position du capteur considéré sur la fibre optique et T2 est fonction des largeurs des échos. T1 et T2 sont ajustés de telle sorte qu'on maximise la portion d'une impulsion de retour comprise pendant le temps DT. DT doit être suffisamment important pour ne pas être sensible aux fluctuations du retard en absolu de la base de temps commandant la génération d'une impulsion optique d'entrée. En revanche, si DT est trop important, la sensibilité du système diminue. Le bon compromis consiste à choisir DT de la même durée que la base de l'écho 41 (fig.4).

To et T2 sont constants alors que T1 est variable pour interroger un capteur particulier de la ligne de capteurs. La modification du paramètre T1 permet ainsi de mesurer les valeurs indiquées par tous les capteurs présents dans une fibre optique.

Si la position des capteurs dans la fibre est inconnue, les temps T1 correspondant aux différents capteurs peuvent être obtenus en injectant le signal électrique de retour dans un oscilloscope. Les instants d'apparition des échos du signal de retour sont alors mesurables et on en déduit les temps T1.

Le générateur de commande des impulsions optiques d'entrée doit bien évidemment être stable dans le temps pour permettre un bon positionnement des fenêtres temporelles par rapport au signal de retour.

Le temps To est réglé de telle sorte que la mesure de Eo soit effectuée en l'absence d'énergie optique dans la fibre, Eo correspondant ainsi au courant d'obscurité de la photodiode à avalanche utilisée pour convertir le signal optique de retour en signal électrique de retour.

Le temps T1 est réglé de telle sortie que T1+DT soit légèrement inférieur à T1+T2.

La mesure des signaux correspondant à d'autres capteurs de la fibre optique s'effectue en modifiant le temps T1 par les lignes 54 et en générant d'autres impulsions optiques d'entrée. Les délais To, T1 et T2 doivent être précis à mieux qu'1 ns près par rapport à un écho d'un signal de retour.

Ce mode de réalisation de l'invention présente l'avantage de permettre le relevé de caractéristiques de capteurs distincts disposés dans une même fibre optique. Une simple modification du temps T1 permet de passer de l'interrogation d'un capteur à celle d'un autre.

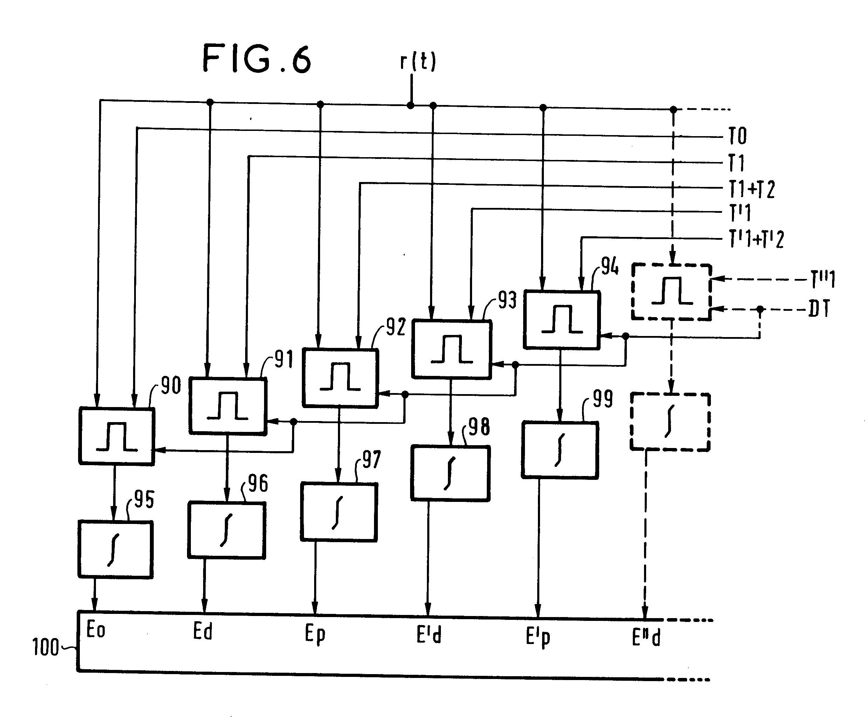

Selon un autre mode de réalisation, 2N+1 ensembles d'intégrateurs-sommateurs coopérant avec des portes sont utilisés pour mesurer les caractéristiques de N capteurs présents dans une fibre optique. Le schéma synoptique d'un tel mode de réalisation est représenté figure 6.

Le dispositif représenté permet de mesurer simultanément les caractéristiques d'un ensemble de capteurs et notamment de tous les capteurs d'une même fibre optique, éventuellement à l'aide d'un seul signal de retour r(t). Il comprend un ensemble composé d'une porte 90 et d'un intégrateur-sommateur 95. La porte 90 sélectionne pendant un temps DT le signal de retour r(t) pendant la période d'obscurité de la fibre optique pour permettre la détermination de Eo, comme dans les cas précédents. Cette valeur Eo sera par la suite exploitée pour déterminer les caractéristiques de chaque capteur dont on mesurera les valeurs Ed et Ep. Des jeux de deux portes coopérant chacune avec un intégrateur-sommateur sont dédiés à la mesure d'une valeur différentielle Ed et d'une valeur Ep de capteurs donnés. Ainsi les portes 91 et 92, de largeur DT, affectées respectivement de retards T1 et T1+T2, sélectionnent deux zones du signal de retour r(t) pour quantifier la réponse d'un premier capteur à l'aide des intégrateurs-sommateurs 96 et 97 respectivement. Il en résulte, au bout d'une ou de plusieurs mesures consécutives, les valeurs analogiques Ed et Ep. D'autre part, les portes 93 et 94, affectées respectivement des retards T'1 et T'1+T'2, coopèrent avec les intégrateurs-sommateurs 98 et 99 pour la mesure de E'd et E'p correspondant aux caractéristiques d'un second capteur. A la fin d'un cycle de mesures, ces valeurs sont mémorisées dans le registre 100 de stockage analogique, en même temps que Eo, Ed et Ep. En traits pointillés figurent une autre porte et un autre intégrateur-sommateur destinés à la détermination de E"d d'un troisième capteur.

Ce mode de réalisation présente l'avantage de permettre un relevé très rapide des caractéristiques des capteurs d'une ligne optique. Dans le cas de mesures de températures de fonctionnement d'une machine, il est ainsi possible de détecter très rapidement un dysfonctionnement entraînant une augmentation de température et d'y remédier en un temps très bref. Les signaux de remise à zéro, de début et de fin de mesure ne sont pas représentés pour des raisons de clarté de la figure.

Le procédé de traitement de signaux de l'invention consistant à intégrer le signal de retour pendant 2N+1 fenêtres temporelles pour l'obtention de valeurs correspondant chacune à l'état d'un obstacle compris dans une fibre optique présente notamment l'avantage d'être applicable à tout type de capteur modifiant la réflexion d'une impulsion optique d'entrée en fonction d'une grandeur extérieure. La présente invention peut également servir à mesurer les pertes consécutives à une soudure réalisée dans une fibre optique. En connaissant l'énergie optique avant et après la soudure, on peut obtenir les pertes en dB dues à cette soudure.

Une application préférentielle de la présente invention est la mesure de températures dans des environnements perturbés tels que des navires méthaniers ou des équipements électrotechniques. Il est alors avantageux d'utiliser un capteur optique dont le chemin optique est constitué de polymères comme représenté en figure 2.

En adoptant une fréquence de récurrence des impulsions optiques d'entrée de l'ordre de 20 kHz pour mesurer les valeurs de 10 capteurs disposés successivement sur une même fibre optique, le procédé de l'invention permet une mesure des valeurs des 10 capteurs en 10 secondes avec un excellent rapport S/B.

Le procédé est dans ce cas appliqué à un dispositif de mesure comprenant trois ensembles portes intégrateurs-sommateurs comme représenté à la figure 5. Toutes les secondes une modification du temps T1 intervient pour mesurer les caractéristiques d'un autre capteur. Le procédé de mesure de l'état de la technique faisant appel à un oscilloscope numérique nécessite 10 secondes pour faire un moyennage sur 100 acquisitions avec une fréquence de récurrence des tirs laser de 20 kHz, alors que le procédé de l'invention effectue pendant le même temps un moyennage de l'information sur 20 000 acquisitions. Le dispositif de l'invention est donc 200 fois plus rapide que ce système pour une même précision ou alors beaucoup plus précis pour le même temps d'acquisition. Il est de plus d'un prix de revient bien inférieur et plus fiable.

Par ailleurs, par rapport au document décrit dans la demande de brevet européen n°0.247.581, l'invention présente l'avantage d'évaluer la réponse d'une pluralité de capteurs sur un même signal électrique de retour, c'est à dire pour une même impulsion optique d'entrée. En effet, les valeurs Eo, et Ed et Ep de chaque capteur, sont acquises sur un même signal de retour. Elles sont donc corrélées pour chaque capteur et la valeur Eo sert de référence (zéro optique) pour tous les capteurs considérés. On s'affranchit alors totalement des variations de caractéristiques du transducteur opto-électronique puisque les mesures sont effectuées presque simultanément. Le rapport signal sur bruit est donc sensiblement amélioré.

**Revendications**

1. Procédé de traitement de signaux optiques obtenus par réflectométrie du type consistant à générer au moins une impulsion optique d'entrée à une extrémité d'une fibre optique et à évaluer le signal optique de retour résultant d'une part de la réflexion partielle de ladite impulsion optique d'entrée sur au moins un obstacle présent dans ladite fibre optique et d'autre part de la diffusion isotrope de ladite impulsion optique d'entrée dans ladite fibre optique, ledit signal optique de retour étant converti en un signal électrique de retour par un transducteur optoélectronique pour être traité, ledit procédé consistant à:

   – mesurer l'amplitude dudit signal électrique de retour juste avant l'apparition d'un écho dudit signal électrique de retour dans une fenêtre temporelle, ledit écho résultant de la réflexion partielle de ladite impulsion optique d'entrée sur un desdits obstacles;

   – mesurer l'amplitude de cet écho dudit signal électrique de retour sur le même signal électrique de retour;

   – générer un signal représentatif d'une caractéristique physique liée à l'obstacle considéré, qui est à l'origine de cet écho, à l'aide desdites amplitudes mesurées,

   caractérisé en ce que, pour chaque obstacle (11,12,13) considéré pour lequel on veut générer ledit signal représentatif de ladite caractéristique,

   – ladite mesure de ladite amplitude dudit signal électrique de retour (r(t)) réalisée juste avant l'apparition d'un écho (41,42,43) dudit signal électrique de retour (r(t)) consiste à acquérir la valeur Ed suivante:

   $$Ed = \sum_{n} \int_{T1}^{T1+DT} r(t)\, dt$$

   avec
   $n =$     nombre d'impulsions optiques d'entrée (15), avec n étant supérieur ou égal à 1;
   $T1 =$     délai précédant le début d'une première fenêtre temporelle (64;91,93) pendant laquelle ladite amplitude dudit signal électrique de retour (r(t)) est évaluée juste avant l'apparition de l'écho (41,42,43) du audit obstacle considéré;
   $DT =$     durée de ladite première fenêtre temporelle (64;91,93);
   $r(t) =$     signal électrique de retour,
   – ladite mesure de l'amplitude de cet écho (41,42,43) dudit signal électrique de retour (r(t)), réalisée sur le même signal électrique de retour (r(t)), consiste à acquérir la valeur Ep suivante:

   $$Ep = \sum_{n} \int_{T1+T2}^{T1+T2+DT} r(t)\, dt$$

   avec $T2 =$     délai séparant le début de ladite première fenêtre temporelle (64;91,93) et le début d'une seconde fenêtre temporelle (63;92,94) comprenant le palier supérieur dudit écho (41,42,43) du audit obstacle (11,12,13) considéré,
   ledit procédé consistant en outre à mesurer, sur lesdits n signaux électriques de retour (r(t)), le courant

**11**

EP 0 508 908 A1

d'obscurité (Eo) dudit transducteur opto-électronique juste avant l'envoi de chaque impulsion optique d'entrée (15), ladite mesure dudit courant d'obscurité consistant à acquérir la valeur Eo suivante:

$$Eo = \sum_{n} \int_{To}^{To+DT} r(t)\, dt$$

avec To = délai précédant le début d'une troisième fenêtre temporelle (65;90) pendant laquelle ledit courant d'obscurité (Eo) est évalué, ladite troisième fenêtre temporelle (65;90) précédant ledit même signal électrique de retour (r(t)),
ledit procédé consistant de plus à calculer le rapport R suivant:

$$R = \frac{Ep - Eo}{Ed - Eo}$$

et à en déduire ledit signal représentatif d'une caractéristique physique liée audit obstacle (11,12,13) considéré.

2. Procédé selon la revendication 1, caractérisé en ce que ladite valeur Eo est identique pour le calcul du rapport R de chacun desdits obstacles (11,12,13) considérés.

3. Procédé selon l'une des revendications 1 et 2, caractérisé en ce que chaque première fenêtre temporelle (64,85,91,93) déterminant une période dudit signal électrique de retour (r(t)) précédant un écho (41,42,43) débute après un temps (T1) préalablement déterminé pour chaque obstacle (11,12,13) de ladite fibre optique, et en ce que chaque deuxième fenêtre temporelle (63,85,92,94) comprenant le palier supérieur d'un écho (41,42,43) correspondant du même signal électrique de retour (r(t)) débute après un temps (T2) fixe suivant chacun desdits temps (T1) variable.

4. Procédé selon l'une des revendications 1 à 3, caractérisé en ce que ladite troisième fenêtre temporelle (65,84,90) précédant ledit signal électrique de retour (r(t)) débute après un temps (To) fixe indépendant de la position desdits obstacles (11,12,13) dans ladite fibre optique (10).

5. Procédé selon l'une des revendications 1 à 4, caractérisé en ce que ledit obstacle (11,12,13) présent dans ladite fibre optique (10) est un capteur du type provoquant une réflexion partielle de ladite impulsion optique d'entrée (15) en fonction d'une grandeur extérieure.

6. Procédé selon la revendication 5, caractérisé en ce que ledit capteur (11,12,13) est un capteur de température et ledit signal représentatif d'une caractéristique physique liée à ce capteur à partir dudit rapport R correspond à une température.

7. Dispositif de traitement de signaux optiques obtenus par réflectométrie, du type permettant d'évaluer un signal optique de retour résultant d'une part de la réflexion partielle d'une impulsion optique d'entrée sur au moins un obstacle présent dans une fibre optique et d'autre part de la diffusion isotrope de cette impulsion optique d'entrée dans ladite fibre optique, ledit signal optique de retour étant converti en un signal électrique de retour par un transducteur opto-électronique pour permettre son traitement, ledit dispositif comprenant un premier moyen de mesure de l'amplitude dudit signal électrique de retour juste avant l'apparition d'un écho dudit signal électrique de retour, ledit écho résultant de la réflexion partielle de ladite impulsion optique d'entrée sur un desdits obstacles, et un deuxième moyen de mesure de l'amplitude de cet écho, lesdites amplitudes étant mesurées pour chacun desdits obstacles dont on veut générer un signal représentatif d'une caractéristique physique liée à cet obstacle,
caractérisé en ce que ledit premier moyen de mesure est constitué par un premier intégrateur-sommateur (61) permettant d'obtenir la valeur Ed suivante:

$$Ed = \sum_{n} \int_{T1}^{T1+DT} r(t)\, dt$$

avec

n = nombre d'impulsions optiques d'entrée (15), avec n étant supérieur ou égal à 1;

T1 = délai précédant le début d'une première fenêtre temporelle (64) pendant laquelle ladite amplitude dudit signal électrique de retour (r(t)) est évaluée juste avant l'apparition de l'écho (41,42,43) du audit obstacle considéré;

DT = durée de ladite première fenêtre temporelle (64);

r(t) = signal électrique de retour,

en ce que ledit deuxième moyen de mesure est constitué par un deuxième intégrateur-sommateur (60) permettant d'obtenir la valeur Ep suivante:

$$Ep = \sum_{n} \int_{T1+T2}^{T1+T2+DT} r(t)\ dt$$

avec T2 = délai séparant le début de ladite première fenêtre temporelle (64) et le début d'une seconde fenêtre temporelle (63) comprenant le palier supérieur dudit écho (41,42,43) du audit obstacle (11,12,13) considéré,

et en ce que ledit dispositif comporte en outre un troisième moyen de mesure permettant de quantifier le courant d'obscurité (Eo) dudit transducteur opto-électronique juste avant l'envoi de chaque impulsion optique d'entrée (15), ledit troisième moyen de mesure étant constitué par un troisième intégrateur-sommateur (62) permettant d'obtenir la valeur Eo suivante:

$$Eo = \sum_{n} \int_{To}^{To+DT} r(t)\ dt$$

avec To = délai précédant le début d'une troisième fenêtre temporelle (65) pendant laquelle ledit courant d'obscurité (Eo) est évalué, ladite troisième fenêtre temporelle (65) précédant ledit même signal électrique de retour (r(t)),

ledit signal représentatif d'une caractéristique physique liée à cet obstacle étant obtenu à l'aide de moyens (74) de calcul effectuant l'opération suivante:

$$R = \frac{Ep - Eo}{Ed - Eo}.$$

# FIG.1

# FIG.2

# FIG.3

# FIG.4

# FIG.5

EP 0 508 908 A1

FIG.6

Office européen
des brevets

**RAPPORT DE RECHERCHE EUROPEENNE**

Numero de la demande

EP    92 40 1025

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 247 581 (COMPAGNIE GENERALE D'ELECTRICITE) <br> * page 6, ligne 33 – page 7, ligne 28 * <br> --- | 1,5,7 | G01D5/26 <br> G01K11/00 |
| Y | WO-A-8 404 439 (CENTRAL ELECTRICITY GENERATING BOARD) <br> * page 6, ligne 26 – page 8, ligne 20 * <br> * page 20, ligne 23 – page 27, ligne 8 * <br> * page 35, ligne 5 – page 41 * <br> --- | 1,5,7 | |
| A | GB-A-2 198 524 (THE PLESSEY CO) <br> * le document en entier * <br> --- | 3 | |
| A | EP-A-0 283 289 (C.R.BARD INC.) <br> * page 8, ligne 55 – page 9, ligne 23 * <br><br> ----- | 1 | |

| DOMAINES TECHNIQUES RECHERCHES (Int. Cl.5) |
|---|
| G01D <br> G01K |

Le présent rapport a été établi pour toutes les revendications

| Lieu de la recherche | Date d'achèvement de la recherche | Examinateur |
|---|---|---|
| LA HAYE | 26 MAI 1992 | RAMBOER P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

       & : membre de la même famille, document correspondant

EPO FORM 1503 03.82 (P0402)